# DEMANDE DE BREVET EUROPEEN

(11) **EP 1 283 634 A1**
(43) Date de publication de la demande: **12.02.2003**
(21) Numéro de dépôt: 02015762.4
(22) Date de dépôt: 15.07.2002
(51) Int. Cl.: H04M 3/493

(54) **Service d'informations de proximite**

(30) Priorité: 09.08.2001 FR 0110682
(71) Demandeur: FRANCE TELECOM, 75015 Paris (FR)
(72) Inventeur: Vernay, Fran-ois, 38000 Grenoble (FR); Grattard, Gilles, 38610 Gieres (FR)
(74) Mandataire: Jeune, Pascale

(57) **Abrégé**

La présente invention se rapporte à un service d'information de proximité accessible par un utilisateur à partir d'un terminal (A) de communication et un système (7) d'information de proximité.

Le système (7) d'information comprend :
- un moyen (E) de mémorisation d'une liste de codes,
- au moins un serveur (M) interactif d'informations de proximité,
- un moyen (D) de traduction d'un code (1),
- un moyen (C) de connexion du terminal (A) de communication au serveur (M) interactif

## Description

L'invention se rapporte au domaine des télécommunications et plus particulièrement aux services disponibles sur un réseau de télécommunication et aux systèmes associés.

Dans les dernières décennies, le réseau téléphonique fixe a évolué considérablement, d'un réseau analogique avec des commutateurs analogiques à un réseau dans lequel le numérique prend une part prépondérante. Ainsi, le réseau téléphonique fixe actuel est composé de mailles reliées par des noeuds dans lesquelles transitent des données. En périphérie d'une maille il y a une ressource du réseau téléphonique telle qu'un serveur ou une base de données, ou un terminal de communication, tel un téléphone fixe. Les noeuds eux-mêmes sont constitués par des ressources du réseau qui comprennent au moins un commutateur. Du fait de son caractère numérique, le réseau est devenu « intelligent » dans le sens où il comprend des logiciels capables de traiter une grande variété de données issues d'applications diverses et qui transitent par les noeuds du réseau. Cette intelligence est répartie au sein du réseau, c'est-à-dire dans les différentes ressources reliées par des mailles. A la fin des années 1980, l'intelligence était essentiellement localisée dans les commutateurs et en particulier dans les commutateurs de transit. Dans les années suivantes, une évolution a vu le jour qui a consisté à séparer les commutateurs de l'évolution des services supportés par le réseau afin d'accélérer et de simplifier la mise en oeuvre de nouvelles offres de service. Du fait de cette évolution, le développement d'un service est devenu relativement indépendant des équipements du réseau téléphonique fixe. Ceci est rendu possible par la présence d'interfaces de programmation entre l'application spécifique du service et un équipement du réseau téléphonique fixe qui se compose d'une partie matérielle et d'une partie logicielle. La partie matérielle peut regrouper des serveurs, des bases de données, des ordinateurs, voire des passerelles vers d'autres réseaux de communication tel le réseau téléphonique mobile ou tel un réseau de communication comme le réseau internet. La partie logicielle regroupe plusieurs couches avec au moins une couche comprenant le système d'exploitation et éventuellement des systèmes de gestion de base de données, une couche comprenant des composants logiciels génériques et une couche comprenant des composants logiciels métiers.

Ainsi les réseaux intelligents font principalement appel à quatre sortes d'équipements. Les commutateurs d'accès aux services, ou CAS, sont des commutateurs d'abonné ou de transit qui ont été dotés de fonctions de réseau intelligent. Les « périphériques intelligents » fournissent des ressources spécifiques à certains services, par exemple un « pont » qui permet une conversation à trois. Les points de commande de service, ou PCS, pilotent les commutateurs d'accès aux services et les périphériques intelligents. Certains de ces points de commande nommés Adjunct en langage anglo-saxon sont reliés à un commutateur d'accès aux services par une liaison de données directe à haut débit qui permet d'accélérer les temps de réponse. Les bases de données temps réel procurent des informations nécessaires à la commande des services.

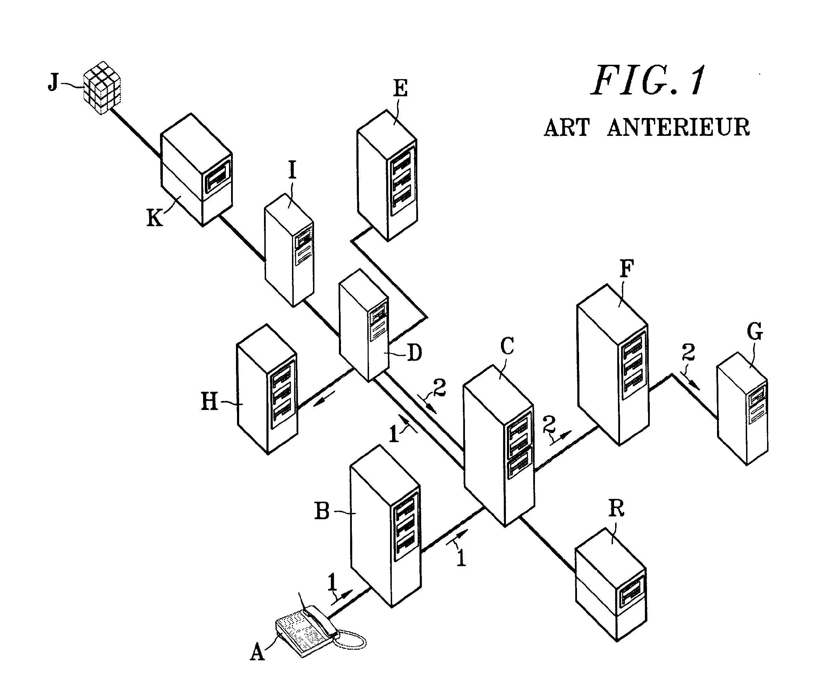

Le service Audiotel est un service dont une version est disponible sur réseau intelligent. L'architecture mise en jeu par ce service est illustrée par la figure 1. Lors d'un appel d'un numéro Audiotel à partir d'un téléphone A demandeur, l'appel 1 transite par un commutateur B local, dit encore d'abonné ou CAA, puis par un commutateur C d'accès au service ou CAS, qui n'est autre qu'un commutateur de transit ou CT, équipé de fonctions de réseau intelligent. Le commutateur CAS transmet le numéro 1 demandé au point D de commande de service ou PCS. Ce dernier s'appuie sur un serveur E re-routeur Audiotel dynamique, nommé SREADY en langage anglo-saxon, pour traduire le numéro 1 demandé en un numéro 2 du réseau téléphonique. L'appel 2 est alors acheminé normalement à travers un commutateur F local vers le serveur G demandé, tandis que le centre H d'enregistrement ou CE traite les aspects de facturation. La gestion du service Audiotel est effectuée au moyen d'un système I de gestion du service ou SGS relié à un système J d'information ou SI à travers un frontal K réseau intelligent. Une plate-forme R vocale traite de commandes vocales du service Audiotel.

Certaines mairies proposent ainsi un service d'information de proximité de type Audiotel qui permet d'accéder à des informations stockées dans une base au moyen de la reconnaissance de fréquences vocales émises depuis un téléphone. Les informations stockées se rapportent aussi bien aux activités culturelles ou sportives proposées par la mairie qu'à la vie civique et ses implications administratives. Les termes informations de proximité sont utilisés par la suite pour désigner ces informations. Un tel service a pour inconvénient d'être spécifique à une mairie, en premier lieu parce qu'il est accessible par un numéro téléphonique variable en fonction de la mairie et, en outre, parce qu'il est généralement développé à partir d'un cahier des charges spécifiques de la mairie. Un des objectifs de l'invention est de proposer un service d'information de proximité qui ne présente pas les inconvénients précités.

A cette fin, la présente invention a pour objet un service d'informations de proximité accessible par un utilisateur à partir d'un terminal de communication relié à un réseau de communication, l'utilisateur recherchant des informations sur une zone administrative déterminée appartenant à un découpage administratif d'un état donné. Ledit service consiste, dans une étape initiale :
- à établir une liste de codes, chaque code étant associé de manière unique à une des zones administratives du découpage et composé d'au moins un groupe d'éléments spécifique des zones administratives et tel que pour chaque code les éléments de ce groupe spécifique sont constitués de la totalité ou d'une partie d'une référence administrative attribuée à la zone administrative associée au code,
et comprend, à chaque demande d'accès au service par l'utilisateur, les étapes qui consistent :
- à acquérir par le terminal un code déterminé sélectionné par l'utilisateur parmi les codes de la liste,
- à traduire le code déterminé en une adresse réseau correspondant à un serveur interactif d'informations de proximité sur la zone administrative associée au code déterminé,
- à connecter le terminal à l'adresse réseau pour mettre en relation l'utilisateur avec le serveur interactif.

L'invention a en outre pour objet un système d'information de proximité faisant partie d'un réseau de communication et accessible par un utilisateur à partir d'un terminal de communication, l'utilisateur recherchant des informations sur une zone administrative déterminée appartenant à un découpage administratif d'un état donné. Ledit système comprend :
- un moyen de mémorisation d'une liste de codes, chaque code étant associé de manière unique à une des zones administratives du découpage et composé d'au moins un groupe d'éléments spécifique des zones administratives et tel que pour chaque code les éléments de ce groupe spécifique sont constitués de la totalité ou d'une partie d'une référence administrative attribuée à la zone administrative associée au code et,
- au moins un serveur interactif d'informations de proximité, les informations se rapportant aux zones administratives auxquelles est associé un code et étant classées selon une arborescence déterminée,
- un moyen de traduction d'un code, le code étant fourni par l'utilisateur au système d'information au moyen de son terminal de communication, en une adresse réseau correspondant à un serveur interactif d'informations de proximité sur la zone administrative associée au code fourni par l'utilisateur,
- un moyen de connexion du terminal de communication au serveur interactif d'informations de proximité.

Ainsi, par l'établissement d'une liste de codes cohérents à l'échelle d'un état et composés d'au moins un groupe d'éléments calqué sur des références administratives, un service selon l'invention permet à un utilisateur de déterminer facilement le code d'accès au serveur interactif d'informations de proximité sur une zone administrative donnée dudit état.

De manière avantageuse, l'utilisateur n'a plus besoin de mémoriser un numéro spécial pour chaque zone administrative d'un état donné, il doit simplement connaître le découpage administratif de l'état.

En outre, par un classement des informations de proximité dans chaque serveur interactif pour chaque zone administrative selon une arborescence déterminée, le système d'information permet de faciliter l'accès aux informations.

Selon un premier mode de réalisation particulier, un service d'informations de proximité selon l'invention est tel que chaque code est composé de deux groupes dont le premier groupe est commun à tous les codes de la liste et dont le second groupe est le groupe spécifique.

Selon un deuxième mode de réalisation particulier, un service d'informations de proximité selon l'invention est tel que la référence administrative est un code postal ou électronique attribué à la zone administrative associée au code.

Selon un troisième mode de réalisation particulier, un service d'informations de proximité selon l'invention est tel qu'il consiste en outre, au cours de l'étape initiale :
- à établir un langage composé de mots ou de groupes de mots, associés à une arborescence déterminée de classement des informations de proximité accessibles à l'utilisateur et en ce qu'il comprend en outre, à chaque demande d'accès au service par l'utilisateur, les étapes qui consistent :
   - à parcourir l'arborescence de classement des informations en fonction de mots ou groupes de mots prononcés par l'utilisateur,
   - à pointer sur une information déterminée dans un espace mémoire déterminé, en fonction de mots ou groupes de mots prononcés par l'utilisateur,
   - à communiquer de manière vocale à l'utilisateur l'information déterminée.

Selon un quatrième mode de réalisation particulier, un service d'informations de proximité selon l'invention est tel qu'il consiste en outre, à chaque demande d'accès au service par l'utilisateur :
- à superviser la connexion entre le terminal et le serveur interactif pour déterminer au moins la durée de la connexion,
- à enregistrer la durée de la connexion avec au moins des références de l'utilisateur et le code sélectionné par l'utilisateur en vue d'une facturation de la connexion.

La présente invention a en outre pour objet un produit programme d'ordinateur chargeable directement dans la mémoire interne d'un ordinateur numérique ou d'un groupement d'ordinateurs, comprenant des portions de code logiciel pour l'exécution des étapes du service selon l'invention, lorsque ledit programme est exécuté sur l'ordinateur ou le groupement d'ordinateurs.

La présente invention a en outre pour objet un support utilisable dans un ordinateur ou un groupement d'ordinateurs et sur lequel est enregistré un produit programme d'ordinateur selon l'objet précédent.

D'autres caractéristiques et avantages de l'invention apparaîtront lors de la description qui suit d'exemples particuliers et non limitatifs de réalisation de l'invention ; ces exemples étant décrits en regard des figures annexées suivantes données à titre d'illustration.

La figure 1 illustre la présentation de l'art antérieur et est un schéma de l'architecture du service Audiotel sur réseau intelligent.

La figure 2 est un schéma des différentes étapes d'un service selon l'invention.

La figure 3 est un schéma de l'architecture du système d'information de proximité selon l'invention.

La figure 4 est un schéma d'un exemple du déroulement d'un service selon l'invention.

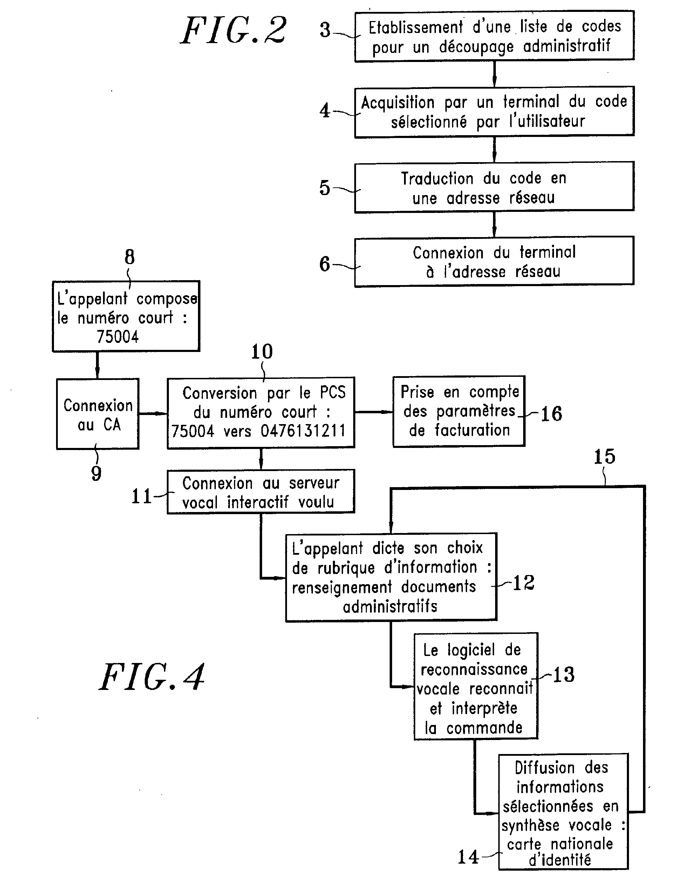

Un service d'information de proximité selon l'invention se déroule selon plusieurs étapes illustrées par la figure 2.

Dans une étape initiale, le procédé consiste à établir 3 une liste de codes. Chaque code est associé de manière unique à une zone administrative d'un découpage administratif d'un état donné. En France, par exemple, le découpage administratif peut correspondre au découpage en départements ou, de manière plus précise, au découpage en bureaux postaux distributeurs qui est plus fin que le découpage en départements. Le
découpage administratif peut aussi bien être un découpage en km que l'on trouve en particulier le long de grands axes routiers.

Ainsi, dans le cas du découpage en bureaux postaux distributeurs, lors de la première étape, le procédé consiste à associer à un bureau distributeur un code composé d'au moins un groupe d'éléments spécifique. Ce groupe spécifique des bureaux postaux distributeurs, est composé de chiffres et est tel que, pour chaque code, les chiffres sont constitués de la totalité ou d'une partie du code postal attribué à un bureau distributeur.

Selon une variante, chaque code peut comprendre deux groupes. Dans ce dernier cas, le premier groupe comprend des chiffres identiques pour tous les codes, par exemple 0800 ou 99, et le second groupe est composé du groupe spécifique.

Selon une variante, les éléments de chaque groupe peuvent être des lettres et éventuellement des chiffres. En effet, chaque touche du clavier d'un téléphone est associée à des lettres de l'alphabet.

Cette étape initiale se déroule préalablement à tout accès par un utilisateur au service d'information de proximité.

A chaque demande d'accès au service par un utilisateur, à partir d'un terminal de communication, le procédé comprend les étapes suivantes.

Dans une première étape, le procédé consiste à acquérir 4 par le terminal un code déterminé. L'utilisateur sélectionne un code parmi la liste de codes et compose le code sur le clavier du terminal. Selon une variante, le code peut être prononcé par l'utilisateur et capté par un microphone du terminal, ou le code peut être directement écrit sur un écran du terminal au moyen d'un stylet. Ainsi, le terminal acquiert un code préalablement sélectionné par l'utilisateur.

Dans une deuxième étape, le procédé consiste à traduire 5 le code déterminé en une adresse réseau. L'adresse réseau est l'adresse du serveur qui permet à l'utilisateur d'obtenir les informations de proximité sur la zone administrative qu'il a sélectionnée au moyen d'un code. Ainsi, si le serveur fait partie du réseau téléphonique français, son adresse est composée de 10 chiffres. La traduction consiste dans ce cas à faire correspondre au code un numéro téléphonique à 10 chiffres.

Dans une troisième étape, le procédé consiste à connecter 6 le terminal de l'utilisateur au serveur dont l'adresse est celle déterminée à l'issue de la traduction précédente. Après l'établissement de la connexion, l'utilisateur peut communiquer avec le serveur.

La communication avec le serveur peut se dérouler soit au moyen des touches du clavier du terminal, soit au moyen de commandes vocales, soit au moyen d'un écran tactile et d'un stylet pour stimuler l'écran.

Quel que soit le moyen précédent utilisé, chacun est tel qu'il permet par l'envoi de commandes, mots, codes DTMF, de parcourir l'arborescence de classement des informations de proximité disponibles sur la zone administrative sélectionnée. A chaque noeud de l'arborescence, le serveur invite l'utilisateur à choisir une des branches accessibles à partir du noeud.

Les choix possibles sont communiqués à l'utilisateur par synthèse vocale, ainsi que les informations de proximité de toute branche choisie par l'utilisateur.

En vue d'une facturation du service, le réseau supervise la connexion établie entre l'utilisateur et le serveur. Pour l'établissement de la facture de l'utilisateur et éventuellement pour le reversement d'une somme monétaire à un gestionnaire des informations de proximité disponibles, le réseau enregistre plusieurs paramètres : la durée de la connexion, les références de l'utilisateur qui comprennent au moins son numéro téléphonique ou son adresse réseau et les références du serveur qui comprennent au moins son adresse réseau.

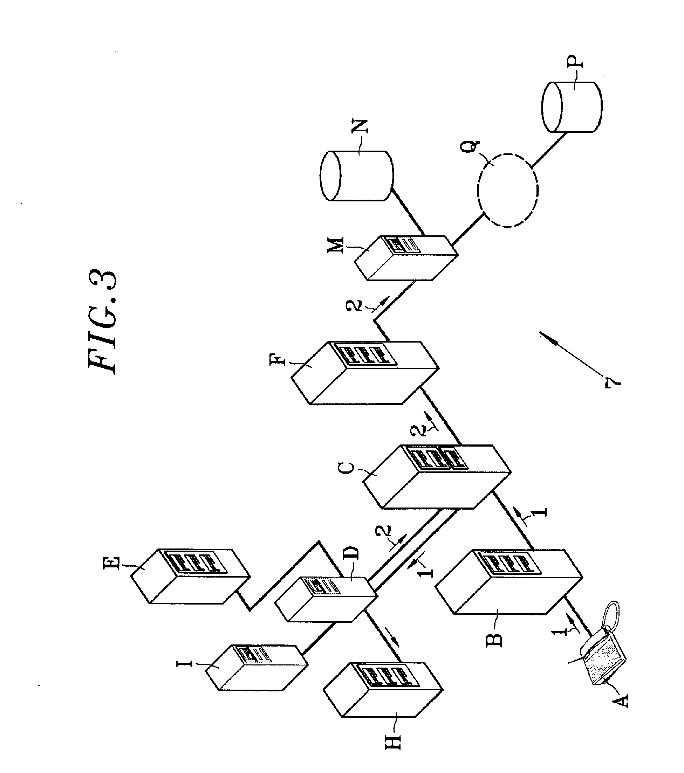

Un schéma de l'architecture du système d'information de proximité est représenté à la figure 3. Le système d'information fait partie d'un réseau de communication et est accessible par un utilisateur à partir d'un terminal de communication. Le réseau de communication est typiquement un réseau téléphonique fixe. Il peut être interconnecté à un réseau téléphonique mobile et/ou à des réseaux de communication distincts du réseau téléphonique tel le réseau internet.

Le terminal A de communication est typiquement un téléphone fixe, mais il peut tout aussi bien être un téléphone mobile, un vidéophone mobile, un assistant personnel connu sous les sigles anglo-saxons PDA pour Personal Digital Assistant ou tout autre terminal de communication tel un ordinateur équipé d'un modulateur/démodulateur.

Le système 7 d'information comprend un moyen E de mémorisation d'une liste de codes, un serveur M interactif d'informations de proximité associé à un espace N mémoire, un moyen D de traduction d'un code et un moyen C de connexion du terminal A de communication au serveur M interactif.

Suivant l'illustration, le moyen E de mémorisation est un serveur de re-routage, le moyen D de traduction est un point de commande de service du réseau et le moyen C de connexion est un commutateur d'accès au service. Le moyen C de connexion est équipé de fonctions de réseau intelligent appelé en langage anglo-saxon Service Switching Function qui lui permettent de dialoguer avec une logique de service exécutée par une entité appelée Service Control Function localisée dans un point de commande de service. L'espace N mémoire stocke les informations de proximité.

De manière typique, le réseau comprend en outre un premier commutateur B d'abonné, un deuxième commutateur F d'abonné, un centre H d'enregistrement et un système I de gestion. Le premier B commutateur d'abonné peut éventuellement être confondu avec le commutateur C d'accès au service. Le commutateur B d'abonné relie le terminal A de communication à un commutateur de transit qui peut être confondu avec le commutateur C d'accès au service.

Le centre H d'enregistrement collecte des paramètres de la communication tels que la durée de la connexion, les références de l'utilisateur et les références du serveur interactif en vue d'une facturation et d'un reversement éventuel. Le point D de commande de service qui supervise la connexion transmet ces paramètres au centre H d'enregistrement. Le système I de gestion est en relation avec le point D de commande de service pour gérer le service. Il peut s'appuyer sur un système I d'informations, tant commercial que client, pour gérer par exemple des personnalisations du service en fonction de profils d'utilisateurs, de tarifs, d'abonnements, de taux de reversement, ou de profils de gestionnaires des informations de proximité rendues disponibles sur le serveur M interactif.

Selon un mode particulier de réalisation du système 7 d'information de proximité, le serveur M interactif est un serveur vocal qui comprend un moyen de synthèse vocale et un moyen de reconnaissance vocale. Dans ces conditions, le serveur M interactif utilise un langage composé de mots ou de groupes de mots générés à partir d'une arborescence de classement des informations de proximité. Ce langage peut être stocké dans l'espace N mémoire.

L'arborescence de classement comprend plusieurs branches terminales auxquelles sont accrochées les informations de proximité. Ces branches terminales partent de différents noeuds intermédiaires qui peuvent eux-mêmes partir de noeuds supérieurs. Ainsi, pour guider l'utilisateur à parcourir l'arborescence, le serveur M interactif lui annonce quels sont les choix possibles, en fonction des choix antérieurs déjà effectués par l'utilisateur, en synthétisant de manière vocale des mots ou groupes de mots du langage. Ces mots ou groupes de mots sont des mots de commande que l'utilisateur doit utiliser pour parcourir différentes branches jusqu'à atteindre une branche terminale. Une fois une branche terminale atteinte, le serveur M interactif synthétise de manière vocale les différentes informations de proximité accrochées à cette branche. De manière complémentaire et facultative, le langage peut comprendre des mots pour interrompre un parcours, pour revenir à un niveau supérieur, pour revenir à un sommaire.

Lorsque l'utilisateur choisit d'obtenir des informations de proximité stockées sur un espace P mémoire relié au serveur interactif par le réseau Q internet, le serveur M interactif synthétise de manière vocale les informations. Dans ces conditions, les informations de proximité stockées dans l'espace P mémoire doivent être encadrées avec des balises, ou tags en langage anglo-saxon, qui structurent leur stockage. A titre d'exemple, l'encadrement des informations de proximité stockées peut suivre les règles du langage VXML. Certaines balises peuvent être utilisées pour définir un accent tonique, pour déterminer le type de phrase à prononcer : affirmation, interrogation, exclamation.

Le déroulement d'un service selon l'invention est illustré par le schéma de la figure 4. Un utilisateur qui recherche des informations sur son arrondissement, 4^{e}, département parisien de code postal 75004, compose 8, à partir de son téléphone fixe chez lui ou au bureau par exemple, un numéro téléphonique court qui reprend le code postal de son arrondissement, soit le numéro 75004. Dès qu'il est disponible, le commutateur d'abonné établit 9 une connexion avec le téléphone et transfère le numéro court dans le réseau téléphonique. Le numéro court demandé est reconnu par le Point de Commande du Service qui le traduit 10 en un numéro téléphonique de taille standard, soit 04 76 13 12 11. A partir de ce numéro téléphonique traduit, une connexion est établie 11 entre le téléphone de l'utilisateur et l'abonné du 04 76 13 12 11. Le Point de commande du service supervise la connexion pour la prise 16 en compte de paramètres de facturation.

L'abonné du 04 76 13 12 11 est un serveur vocal interactif capable de fournir des informations de proximité sur le 4^{e} arrondissement du département parisien. Le serveur vocal interactif communique à l'utilisateur les rubriques disponibles. L'utilisateur choisit 12 la rubrique "Renseignements documents administratifs". Le logiciel de reconnaissance vocale reconnaît 13 le groupe de mots et après interprétation synthétise 14 l'information accrochée à la rubrique choisie. L'utilisateur peut revenir 15 au sommaire pour choisir une autre rubrique.

## Revendications

1. Service d'information de proximité accessible par un utilisateur à partir d'un terminal (A) de communication relié à un réseau de communication, l'utilisateur recherchant des informations sur une zone administrative déterminée appartenant à un découpage administratif d'un état donné, **caractérisé en ce qu'**il consiste, dans une étape initiale :
- à établir (3) une liste de codes, chaque code étant associé de manière unique à une des zones administratives du découpage et composé d'au moins un groupe d'éléments spécifique des zones administratives et tel que pour chaque code les éléments de ce groupe spécifique sont constitués de la totalité ou d'une partie d'une référence administrative attribuée à la zone administrative associée au code,
**en ce qu'**il comprend, à chaque demande d'accès au service par l'utilisateur, les étapes qui consistent :
- à acquérir (4) par le terminal (A) un code déterminé sélectionné par l'utilisateur parmi les codes de la liste,
- à traduire (5) le code déterminé en une adresse (2) réseau correspondant à un serveur (M) interactif d'informations de proximité sur la zone administrative associée au code déterminé,
- à connecter (6) le terminal à l'adresse (2) réseau pour mettre en relation l'utilisateur avec le serveur (M) interactif.

2. Service d'information de proximité selon la revendication 1, dans lequel chaque code est composé de deux groupes dont le premier groupe est commun à tous les codes de la liste et dont le second groupe est le groupe spécifique.

3. Service d'information de proximité selon l'une des revendications 1 et 2, dans lequel la référence administrative est un code postal (75004) ou électronique attribué à la zone administrative associée au code.

4. Service d'information de proximité selon l'une des revendications 1 à 3, **caractérisé en ce qu'**il consiste en outre, au cours de l'étape initiale :
- à établir un langage composé de mots ou de groupes de mots, associés à une arborescence déterminée de classement des informations de proximité accessibles à l'utilisateur et **en ce qu'**il comprend en outre, à chaque demande d'accès au service par l'utilisateur, les étapes qui consistent :
- à parcourir (13) l'arborescence de classement des informations en fonction de mots ou groupes de mots prononcés par l'utilisateur,
- à pointer (13) sur une information déterminée dans un espace (N, P) mémoire déterminé, en fonction de mots ou groupes de mots prononcés par l'utilisateur,
- à communiquer (14) de manière vocale à l'utilisateur l'information déterminée.

5. Service d'information de proximité selon l'une des revendications 1 à 4, **caractérisé en ce qu'**il consiste en outre, à chaque demande d'accès au service par l'utilisateur :
- à superviser (16) la connexion entre le terminal (A) et le serveur (M) interactif pour déterminer au moins la durée de la connexion,
- à enregistrer (16) la durée de la connexion avec au moins des références de l'utilisateur et le code sélectionné par l'utilisateur en vue d'une facturation de la connexion.

6. Système (7) d'information de proximité faisant partie d'un premier réseau de communication et accessible par un utilisateur à partir d'un terminal (A) de communication, l'utilisateur recherchant des informations sur une zone administrative déterminée appartenant à un découpage administratif d'un état donné **caractérisé en ce qu'**il comprend :
- un moyen (E) de mémorisation d'une liste de codes, chaque code étant associé de manière unique à une des zones administratives du découpage et composé d'au moins un groupe d'éléments spécifique des zones administratives et tel que pour chaque code les éléments de ce groupe spécifique sont constitués de la totalité ou d'une partie d'une référence administrative attribuée à la zone administrative associée au code et,
- au moins un serveur (M) interactif d'informations de proximité associé à au moins un espace (N) mémoire de stockage de données d'informations de proximité, les informations se rapportant aux zones administratives auxquelles est associé un code et étant classées selon une arborescence déterminée,
- un moyen (D) de traduction d'un code (1), le code (1) étant fourni par l'utilisateur au système (7) d'information au moyen de son terminal (A) de communication, en une adresse (2) réseau correspondant à un serveur (M) interactif d'informations de proximité sur la zone administrative associée au code (1) fourni par l'utilisateur,
- un moyen (C) de connexion du terminal (A) de communication au serveur (M) interactif d'informations de proximité.

7. Système (7) d'information de proximité selon la revendication 6, dans lequel chaque serveur (M) interactif est un serveur vocal interactif comprenant un moyen de synthèse vocale et un moyen de reconnaissance vocale.

8. Système (7) d'information de proximité selon la revendication 7, **caractérisé en ce qu'**il comprend en outre :
- un moyen (N) de mémorisation d'un langage composé de mots ou de groupes de mots, associés à une arborescence de classement des informations de proximité accessibles à l'utilisateur.

9. Système (7) d'information de proximité selon l'une des revendications 7 et 8, **caractérisé en ce qu'**au moins un (P) des espaces (P, N) mémoire de stockage de données d'informations de proximité est relié au serveur (M) interactif au moyen d'un second réseau (Q) de communication distinct du premier réseau de communication.

10. Système (7) d'information de proximité selon la revendication 9, dans lequel le second réseau (Q) de communication est un réseau de transfert de données tel le réseau internet.

11. Un produit programme d'ordinateur chargeable directement dans la mémoire interne d'un ordinateur numérique ou d'un groupement d'ordinateurs, comprenant des portions de code logiciel pour l'exécution des étapes du service selon l'une des revendications 1 à 5, lorsque ledit programme est exécuté sur l'ordinateur ou le groupement d'ordinateurs.

12. Support utilisable dans un ordinateur ou un groupement d'ordinateurs et sur lequel est enregistré un produit programme d'ordinateur selon la revendication 11.
